# DEMANDE DE BREVET EUROPEEN

(11) **EP 0 908 381 A1**
(43) Date de publication de la demande: **14.04.1999**
(21) Numéro de dépôt: 98118339.5
(22) Date de dépôt: 28.09.1998
(51) Int. Cl.: B62M 25/08, B62J 39/00

(54) **Dispositif d'affichage à cristaux liquides pour une bicyclette**

(30) Priorité: 10.10.1997 FR 9713082
(71) Demandeur: MAVIC S.A., 01990 Saint-Trivier sur Moignans (FR)
(72) Inventeur: Kubacsi, Michel, 01600 Toussieux (FR); Montagnon, Bruno, 01480 Ars sur Formans (FR)
(74) Mandataire: Lejeune, Benoit

(57) **Abrégé**

L'invention concerne un dispositif d'affichage prévu pour être associé d'une part avec un dérailleur électrique (10), et d'autre part avec au moins un capteur (30, 33) d'au moins un paramètre de performance de la bicyclette ou du cycliste. Le dérailleur (10) est prévu pour émettre un signal de confirmation qu'un déplacement demandé a été effectué. Ce signal est envoyé à un circuit de traitement (38) qui élabore une information relative au pignon appelé, adresse cette information à un gestionnaire d'affichage (40). Le gestionnaire d'affichage occulte pendant un temps déterminé par une temporisation (39) l'un des affichages en cours de l'unité d'affichage (28) et envoie à l'affichage l'information relative au mignon appelé.

## Description

L'invention concerne un dispositif d'affichage à cristaux liquides pour une bicyclette.

De façon connue, un tel dispositif comprend une unité d'affichage qui est généralement fixée au guidon de la bicyclette, et une unité de traitement qui est reliée à des capteurs et qui comprend des moyens de calcul. Un tel dispositif informe le cycliste de paramètres relatifs à son parcours et sa performance, notamment la vitesse instantanée, la vitesse moyenne, la distance parcourue, le temps écoulé etc....

De façon également connue, l'information est affichée sous forme de chiffres et d'un pictogramme qui informe de la nature de l'information affichée.

Selon les cas, une ou plusieurs informations peuvent être présentes sur l'unité d'affichage, et le cycliste a la possibilité d'appeler à l'affichage des informations de nature différente par exemple en pressant un bouton poussoir intégré au boîtier de l'afficheur.

On connaît d'après la demande de brevet européen publiée sous le numéro EP 641 711 un dispositif d'affichage de ce type qui est associé à un mécanisme de commande de changement de vitesse. En cas de commande de changement de vitesse, l'affichage en cours est remplacé momentanément par le numéro du pignon vers lequel la chaîne est appelée à être transférée. Passé un laps de temps déterminé, l'affichage précédent réapparaît.

Un tel dispositif est avantageux, car sans aucune intervention autre que la commande de changement de vitesse, le cycliste est informé du pignon vers lequel la chaîne va se déplacer.

Toutefois il présente un certain nombre d'inconvénients. Tout d'abord, le dispositif réagit à la commande de changement de vitesse, et non au déplacement du dérailleur lui-même.

En outre, l'information du numéro de pignon est donnée par le boîtier de commande du changement de vitesse, en fonction du déplacement du levier de commande ou de sa position.

Ce dispositif n'est donc pas adapté à un dérailleur de type électrique tel qu'il est connu par exemple de la demande de brevet publiée sous le numéro EP 558 425. Pour un tel dérailleur en effet, le changement de vitesse est commandé par une impulsion sur l'un ou l'autre de deux poussoirs. L'information du numéro de pignon ne peut donc pas être prélevée au niveau de la commande de changement de vitesse. En outre, pour un dérailleur électrique tel que celui-ci, le déplacement de l'ensemble mobile de déraillement ne suit pas instantanément la commande.

De plus, pour les dérailleurs électriques, il est possible d'utiliser plusieurs interrupteurs de commande situés à différents endroits du cintre, le cas échéant du cadre.

Le dispositif décrit dans le document EP 558 425 n'est pas compatible avec une telle commande multiple du dérailleur.

Un but de l'invention est de proposer une unité d'affichage perfectionnée qui informe en temps réel d'un changement de pignon.

Un autre but de l'invention est de proposer une unité d'affichage perfectionnée qui soit bien adaptée pour un dérailleur de type électrique et pour une commande multiple.

D'autres buts et avantages de l'invention apparaîtront au cours de la description qui va suivre.

Le dispositif d'affichage selon l'invention est prévu pour être associé d'une part avec un dérailleur électrique comprenant au moins un interrupteur de commande, un ensemble mobile de changement de vitesse, des moyens de déplacement réversible de l'ensemble mobile pas à pas, et d'autre part avec au moins un capteur d'au moins un paramètre de performance de la bicyclette ou du cycliste ou un paramètre externe à la bicyclette et au cycliste, l'unité comprenant elle-même des moyens de traitement des différents paramètres captés par les capteurs, une unité d'affichage avec au moins un écran d'affichage d'une des valeurs de paramètre calculée par l'unité de traitement. Il est caractérisé par le fait qu'il comprend un circuit de traitement connecté au moyen de détection du déplacement de l'ensemble mobile prévu pour être activé par le dérailleur électrique et pour déterminer le numéro du pignon sur lequel la chaîne a été transférée à la réception du signal de détection émis par les moyens de détection, un gestionnaire d'affichage associé à un écran d'affichage prévu pour occulter la valeur du paramètre affiché et remplacer cette valeur par une information relative au numéro de pignon déterminé par le circuit de traitement, et une temporisation pour désactiver le gestionnaire d'affichage après un laps de temps déterminé.

L'invention sera mieux comprise en se référant à la description ci-dessous et aux dessins en annexe qui en font partie intégrante.
La figure 1 représente de façon générale une bicyclette équipée de l'unité d'affichage selon l'invention.
La figure 2 illustre de façon schématique les différentes fonctions de l'unité selon l'invention.
La figure 3 représente de façon schématique le dispositif d'indexation du dérailleur de la figure 2.
La figure 4 illustre par trois sous-figures 4a, 4b, 4c un premier mode de fonctionnement de l'unité d'affichage.
La figure 5 illustre par cinq sous-figures 5a, 5b, 5c, 5d, 5e un second mode de fonctionnement.

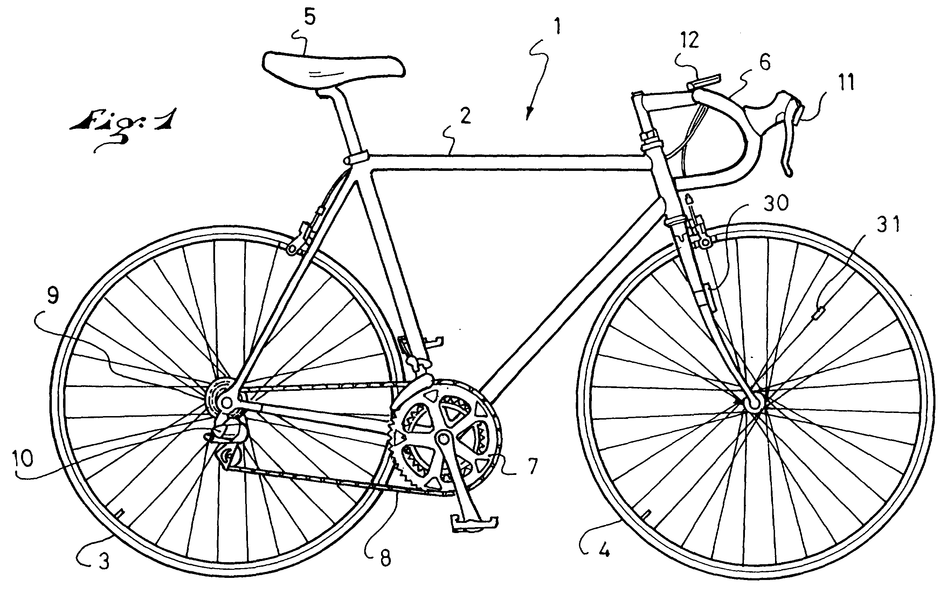

La bicyclette 1 représentée en figure 1 présente de façon connue un cadre 2, deux roues avant et arrière 3 et 4, une selle 5, un guidon avec un cintre 6, un pédalier 7.

A l'arrière, la chaîne 8 est en prise avec l'un des pignons d'un ensemble de pignons 9. De façon usuelle, l'ensemble de pignons est formé par une cassette de 7 à 9 pignons. Un dérailleur arrière 10 permet de transférer la chaîne d'un pignon à un autre.

Le dérailleur est de type électrique et il est commandé par un interrupteur 11 situé sur le cintre du guidon.

Le dérailleur est par exemple du type décrit dans la demande de brevet EP 558 425. Le dérailleur 10 est prévu pour déplacer la chaîne pas à pas dans un sens ou dans l'autre de façon à la transférer d'un pignon à un autre pignon adjacent.

Le dérailleur décrit dans la demande EP 558 425 comprend un boîtier principal 14 prévu pour être fixé au cadre, et un ensemble mobile de déraillement 15 avec notamment les deux roues de renvoi 17 et 18. La rotation de la roue supérieure 17 se produit avec le déplacement de la chaîne. Elle entraîne le mouvement de va et vient en translation d'une tige de commande à l'intérieur du boîtier principal 14. Deux électro-aimants, l'un pour la montée des pignons, l'autre pour la descente, sont liés au boîtier. Ils ont chacun un plongeur prévu pour s'engrener dans un entre-dent d'une crémaillère qui leur est associée respectivement. Les deux crémaillères sont portées par la tige de commande. L'engrènement d'un plongeur d'électro-aimant lie momentanément la tige de commande au boîtier principal, et déplace par réaction l'ensemble mobile de déraillement.

Un dispositif d'indexation permet par ailleurs de relâcher l'engrènement une fois que le déplacement de l'ensemble mobile sur un pas a été réalisé.

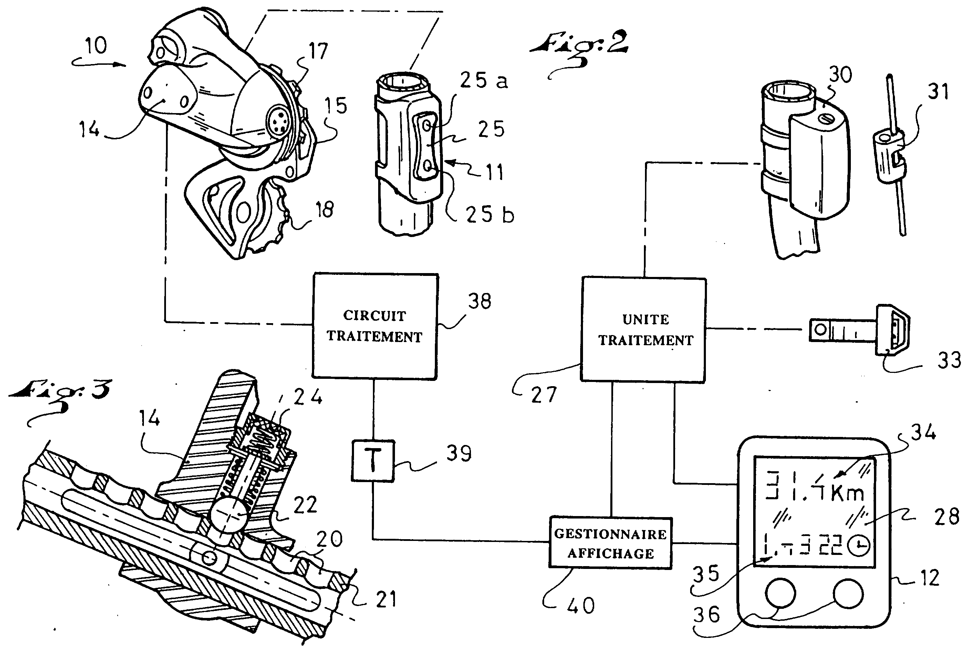

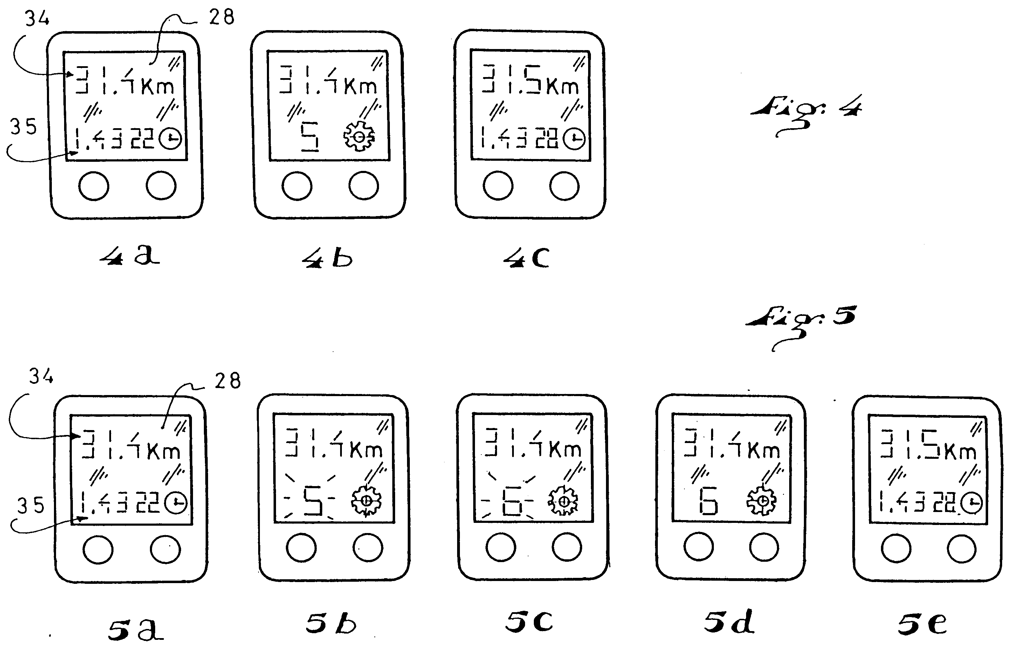

En se référant à la figure 3, le dispositif d'indexation comprend sur une série de creux d'indexation 20 dont le nombre est égal au nombre de pignons, et dont l'espacement correspond au pas de déplacement de l'ensemble mobile. Les creux 20 sont situés sur l'ensemble mobile de déraillement. Une bille 22 prévue pour s'engager dans les différents creux est logée dans le boîtier principal 14. La bille est repoussée par un ressort. En outre, elle pilote un petit interrupteur 24 formé par deux rondelles, en ce sens que l'interrupteur 24 se referme lorsque la bille retombe dans un creux après un déplacement. Ce signal électrique de fermeture de l'interrupteur 24 est adressé à l'unité de traitement, et l'unité de traitement renvoie alors un signal de coupure de l'alimentation de l'électroaimant. Ce signal est en outre utilisé dans le cas présent en tant que signal de confirmation que le déplacement demandé a été effectué.

Ce mode de construction n'est pas limitatif, et le dispositif d'indexation pourrait être construit de façon différente. Le signal d'indexation pourrait aussi être prélevé depuis tout autre moyen approprié.

Dans le mode de réalisation illustré, l'interrupteur 11 qui commande le dérailleur 10 comprend un levier à bascule 25, avec deux poussoirs 25a et 25b, pour adresser au dérailleur une commande de montée ou de descente de vitesse. Il est possible que la bicyclette soit équipée de plusieurs interrupteurs tel que l'interrupteur 11, placés à portée de main du cycliste pour ses différentes postures.

Dans le EP 558 425, une liaison avec fil est prévue entre le ou les interrupteurs et le dérailleur. Cette liaison pourrait être réalisée également sans fil, par ondes hertziennes avec un protocole de transmission.

Il faut noter que le dérailleur qui vient d'être décrit n'est pas limitatif pour l'invention, d'autres dérailleurs peuvent convenir, l'important étant qu'il soit prévu pour émettre à la fin d'un déplacement un signal de confirmation que le déplacement de l'ensemble mobile de déraillement a bien été réalisé.

Selon l'invention, la bicyclette 1 est par ailleurs équipée d'un boîtier 12 comprenant une unité de traitement 27 et une unité d'affichage 28.

L'unité de traitement 27 est reliée à des capteurs de performance de la bicyclette ou du cycliste, ou le temps. Par exemple, comme cela est illustré, il s'agit d'un capteur à relais reed 30 porté par un bras de la fourche avant, et excité par le passage d'un aimant 31 porté par un rayon de la roue. D'après les signaux émis par ce capteur, l'unité de traitement peut déterminer la distance, la vitesse, l'accélération, etc.... Un autre capteur schématisé est un capteur de pression 33 qui permet à l'unité de traitement de calculer l'altitude, le dénivelé réalisé, etc.... D'autres capteurs pourraient aussi être connectés à l'unité de traitement.

L'unité d'affichage 28 est prévue pour afficher les valeurs des paramètres calculées par l'unité de traitement. La figure 2 représente deux afficheurs 34 et 35 à cristaux liquides qui permettent d'afficher simultanément deux paramètres de nature différente, avec leur pictogramme. Ceci n'est pas limitatif, et l'on pourrait avoir davantage d'afficheurs, ou, à l'inverse, un seul afficheur.

Des poussoirs 36 sont prévus pour changer la fonction affichée, et pour paramètrer l'unité de traitement 27. Tout autre moyen approprié peut aussi convenir.

Selon l'invention, le dérailleur 10 est relié à un circuit de traitement 38. Ce circuit est prévu pour informer du pignon qui est en cours d'utilisation par la chaîne. Cette information peut être le numéro de pignon, ou une information liée au pignon, par exemple le nombre de dents. L'information délivrée par le circuit de traitement est indexée par le signal de confirmation en provenance de l'interrupteur 24 combiné à un autre signal en provenance du dérailleur ou de l'interrupteur 11 qui précise dans quel sens le dérailleur a fonctionné.

Le circuit de traitement 38 est relié à un gestionnaire d'affichage 40 qui est interposé dans la liaison entre l'unité de traitement 27 et l'un des afficheurs, l'afficheur 35 dans le cas de la figure 2.

Le gestionnaire d'affichage 40 est activé en cas de changement de vitesse. Sa fonction est d'occulter l'affichage du paramètre en cours et d'envoyer à l'affichage l'information sur le pignon en provenance du circuit de traitement. Cette information est relative au pignon en service, c'est-à-dire sur le pignon vers lequel la chaîne a été transférée à la suite d'un changement de vitesse.

Une temporisation 39 est par ailleurs interposée entre le circuit de traitement 38 et le gestionnaire d'affichage 40. Cette temporisation désactive le gestionnaire d'affichage au bout d'un temps déterminé, de l'ordre de quelques secondes. La désactivation annule l'affichage relatif au pignon, et rétablit l'affichage du paramètre précédemment sélectionné.

La sous-figure 4a illustre un premier mode de fonctionnement du dispositif. En figure 4a, l'unité d'affichage 28 affiche en haut, à l'afficheur 34, la distance et en bas, à l'afficheur 35, le temps écoulé. Au moment où le cycliste envoie une commande de changement de vitesse, l'unité d'affichage continue d'afficher les valeurs des paramètres en cours.

Lorsque le signal de changement de vitesse est émis et traité par le circuit de traitement 38, le circuit de traitement est activé, et il adresse au gestionnaire d'affichage une information relative au pignon appelé, c'est-à-dire atteint par la chaîne. Le gestionnaire d'affichage 40 provoque l'affichage à l'afficheur du bas 35 de l'information relative au pignon atteint par la chaîne, le numéro du pignon "6" selon l'exemple de la sous-figure 4b. Cela active également le circuit de temporisation 39. L'afficheur du haut 34 continue à indiquer la distance parcourue. Une fois que le temps est écoulé, la temporisation désactive le gestionnaire d'affichage, et l'afficheur du bas indique de nouveau la valeur du paramètre initialement présentée en bas, c'est-à-dire le temps écoulé. Ceci est illustré en figure 4c.

La figure 5 illustre un autre mode de fonctionnement. En sous-figure 4a, l'unité d'affichage 28 indique en haut la distance parcourue et en bas le temps écoulé. La sous-figure 5b correspond à l'instant où le cycliste envoie la commande de changement de vitesse. A la réception de ce signal, le circuit de traitement est activé, et il adresse au gestionnaire d'affichage une information relative au pignon en service, par exemple son numéro. Le numéro du pignon en service à cet instant apparaît en mode clignotant ou en mode scintillant sur l'afficheur 35. Puis, le circuit de traitement adresse une information relative au pignon appelé, par exemple son numéro. Ce numéro se met à clignoter sur l'afficheur 35, comme illustré en sous-figure 5c. Une fois le signal de confirmation reçu, le circuit de traitement envoie un signal de confirmation, le numéro du pignon atteint par la chaîne apparaît de manière fixe pendant une durée de temps déterminée. Ceci correspond à la sous-figure 5d. Après que ce temps se soit écoulé, le gestionnaire d'affichage est désactivé, et l'affichage initial du temps reprend sur l'afficheur du bas 35 comme le montre la sous-figure 5e.

D'autres modes de fonctionnement pourraient être adoptés, l'important étant que l'information relative au pignon appelé s'affiche pendant un temps limité seulement après qu'un signal de confirmation du déplacement du dérailleur ait été reçu par le circuit de traitement.

## Revendications

1. Dispositif d'affichage prévu pour être associé d'une part avec un dérailleur électrique (10) comprenant au moins un interrupteur de commande (11), un ensemble mobile de changement de vitesse (15), des moyens de déplacement réversible de l'ensemble mobile pas à pas, et d'autre part avec au moins un capteur (30, 33) d'au moins un paramètre de performance de la bicyclette ou du cycliste ou un paramètre externe à la bicyclette et au cycliste, l'unité comprenant elle-même des moyens de traitement (27) des différents paramètres captés par les capteurs, une unité d'affichage avec au moins un écran d'affichage (34, 35) d'une des valeurs de paramètre calculée par l'unité de traitement (27), caractérisé par le fait qu'il comprend un circuit de traitement (38) connecté au moyen de détection du déplacement de l'ensemble mobile prévu pour être activé par le dérailleur électrique et pour déterminer le numéro du pignon sur lequel la chaîne a été transférée à la réception du signal de détection émis par les moyens de détection, un gestionnaire d'affichage (40) associé à un écran d'affichage (35) prévu pour occulter la valeur du paramètre affiché et remplacer cette valeur par une information relative au numéro de pignon déterminé par le circuit de traitement, et une temporisation (39) pour désactiver le gestionnaire d'affichage après un laps de temps déterminé.

2. Dispositif selon la revendication 1, caractérisé par le fait que le gestionnaire d'affichage est interposé dans la liaison entre l'unité de traitement d'un (35) des afficheurs et l'afficheur (35).

3. Dispositif selon la revendication 1 associé à un dérailleur électrique, caractérisé par le fait que le dérailleur électrique présente des moyens (24) d'émission d'un signal de confirmation que le déplacement du dérailleur a été effectué.

4. Dispositif selon la revendication 3, caractérisé par le fait que le circuit de traitement commande le gestionnaire d'affichage à la réception du signal de confirmation du déplacement du dérailleur (10).

5. Dispositif selon la revendication 4, caractérisé par le fait que le circuit de traitement adresse au gestionnaire d'affichage l'information relative au pignon appelé à la réception du signal de confirmation du déplacement du dérailleur (10).

6. Dispositif selon la revendication 3, caractérisé par le fait que le circuit de traitement commande le gestionnaire d'affichage à la commande de changement de vitesse et à la réception du signal de confirmation du déplacement du dérailleur (10).

7. Dispositif selon la revendication 6, caractérisé par le fait que le circuit de traitement adresse au gestionnaire d'affichage une information relative au pignon en service à la commande du changement de vitesse et une information relative au pignon appelé à la réception du signal de confirmation de déplacement du dérailleur.
